# EUROPEAN PATENT SPECIFICATION

(11) **EP 2 391 934 B1**
(45) Date of publication and mention of the grant of the patent: **28.08.2019**
(21) Application number: 10736451.5
(22) Date of filing: 29.01.2010
(51) Int. Cl.: G06F 3/01, G06F 3/0482, G06F 1/16

(54) **SYSTEM AND METHOD FOR INTERPRETING PHYSICAL INTERACTIONS WITH A GRAPHICAL USER INTERFACE**
SYSTEM UND VERFAHREN ZUR INTERPRETATION PHYSISCHER INTERAKTIONEN MIT EINER GRAFISCHEN BENUTZERSCHNITTSTELLE
SYSTÈME ET PROCÉDÉ D'INTERPRÉTATION D'INTERACTIONS PHYSIQUES AVEC UNE INTERFACE GRAPHIQUE UTILISATEUR

(30) Priority: 29.01.2009 US 148312 P; 26.05.2009 US 181280 P; 14.07.2009 US 502702
(43) Date of publication of application: 07.12.2011
(73) Proprietor: Immersion Corporation, San Jose CA 95134 (US)
(72) Inventor: BIRNBAUM, David, Oakland, California 94607 (US); ULLRICH, Christopher, J., Ventura, California 93003 (US); RUBIN, Peter, Berkeley, California 94705 (US); NGO, Phong, David, San Francisco, California 94110 (US); KOPELOW, Leo, San Francisco, California 94110 (US)
(74) Representative: Phillips & Leigh LLP
(86) International application number: PCT/US2010/022528
(87) International publication number: WO 2010/088477

(56) References cited:
- EP-A1- 0 581 591
- WO-A2-2004/075169
- US-A- 5 666 499
- US-A1- 2004 263 479
- US-A1- 2005 093 868
- US-A1- 2005 179 617
- US-A1- 2005 216 867
- US-A1- 2006 017 692
- US-A1- 2006 094 480
- US-A1- 2006 279 542
- US-A1- 2007 082 707
- US-A1- 2007 120 819
- US-A1- 2007 152 984
- US-A1- 2007 247 442
- US-A1- 2007 268 246
- US-A1- 2007 290 999
- US-A1- 2008 125 224
- US-A1- 2008 300 055
- US-B1- 6 545 669

## Description

### FIELD OF THE INVENTION

The present invention generally relates to graphical user interfaces and, more particularly, to systems and methods for interpreting physical interactions with a graphical user interface.

### BACKGROUND

Conventional user devices may use basic interface mechanisms for allowing a user to interact with the device, such as touch screens or buttons, to select applications, dial phone numbers, or type text messages. In such devices, navigation through multiple levels of the interface may be tedious, require significant attention by the user, require precise manipulation of the device to correctly access the desired function, or may require the use of two hands to hold and navigate the user interface. For example, such devices may include conventional text messaging systems that may use a multi-step process for selecting a message recipient, typing a message, and sending the message. Accordingly, there is a need for systems and methods for interpreting physical interactions with a graphical user interface responsive to user gestures. Prior art graphical user interfaces responsive to user gestures are disclosed in US 2004/0263479 A1, US6545669 B1, US2005/0093868 A1, WO 2004/075169 A2, EP 0581591 A1, and US 2007/0082707.

### SUMMARY

Embodiments of systems and methods for interpreting physical interactions with a graphical user interface are disclosed as defined in the appended claims. Illustrative embodiments are discussed in the Detailed Description, where further description of the invention is provided. The advantages offered by various embodiments of this invention may be further understood by examining this specification.

### BRIEF DESCRIPTION OF THE DRAWINGS

These and other features, aspects, and advantages of the present invention are better understood when the following Detailed Description is read with reference to the accompanying drawings, wherein:
Figure 1 shows a device for providing a graphical user interface according to one embodiment of the present invention;
Figures 2a-d show a graphical user interface according to embodiments;
Figure 3 shows a method for providing a graphical user interface according to one embodiment of the present invention; and
Figures 4-9b show graphical user interfaces according to embodiments of the present invention.

### DETAILED DESCRIPTION

Embodiments of the present invention provide systems and methods for interpreting physical interactions with a graphical user interface.

For example, in one illustrative embodiment of the present invention, a cell phone comprises a touch-sensitive display screen, a processor for executing various applications, and a sensor capable of sensing movement of the cell phone. When activated, the cell phone displays a graphical user interface to allow the user to access functionality provided by the cell phone, such as telephone functions, contact information, an Internet browser, and electronic mail functions. Similar to some conventional cell phones, a user of the illustrative cell phone may touch the touch-sensitive display screen to interact with the graphical user interface, such as touching various icons to activate functions provided by the cell phone. However, this illustrative embodiment also allows a user to interact with the cell phone in unconventional ways.

For example, a user may quickly jog or shake the cell phone to activate a motion-sensitive graphical user interface. Once the motion-sensitive graphical user interface is activated, the user may physically move the phone in various directions or through various orientations to navigate through different features of the graphical user interface. For example, one illustrative graphical user interface may display a plurality of icons representing functions available within the cell phone. The icons are arranged along a series of channels representing a gear shift pattern of an automobile, such as a conventional 6-speed gear shift pattern, along with a graphical representation of a gear shift lever within the shift pattern. To navigate to a desired function, the user may move the phone as though it were a shift lever. As the user moves the cell phone, a sensor, such as a gyroscopic sensor, detects the movement of the cell phone and provides the movement information to the cell phone's processor. The processor interprets the sensor signals and changes the position of the displayed gear shift knob to track the movement of the cell phone. Once the user has "shifted" to the desired function, the user may quickly jog or shake the cell phone to activate the function. Again the jog is sensed by the sensor and transmitted to the processor. The processor interprets the motion as a selection of the function and then executes the function. Such a motion-sensitive graphical user interface may be desirable when a user wishes to quickly activate a function without the need to intently concentrate on manipulating a user interface by touch, or if the user is carrying something in one of her hands and only has the other hand free to use the cell phone.

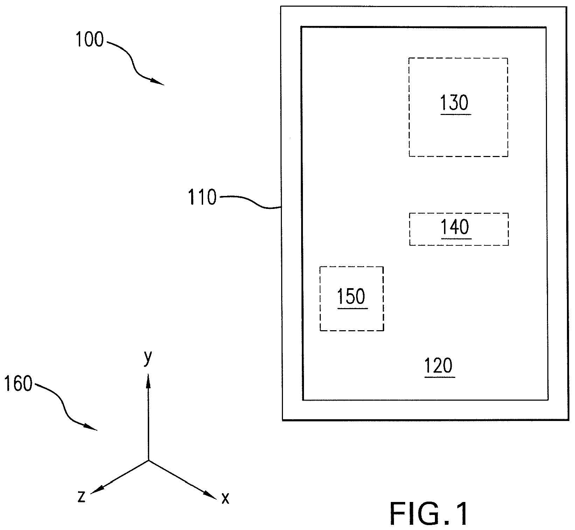

Referring now to Figure 1, Figure 1 shows a device 100 for providing a graphical user interface according to one embodiment of the present invention. The device 100 comprises a housing 110, a display 120, a processor 130, a sensor 140, and an actuator 150. In the embodiment shown, the housing 110 is a cell phone housing, however, in other embodiments, the housing 110 may be other types of housings, such as a housing for a personal digital assistant (PDA), remote control (e.g. for a TV), a cellular telephone, mobile computer, a display, or other suitable device. In some embodiments, housing 110 may comprise a handheld device housing, in other embodiments, housing 110 may comprise a larger housing, for example a computer monitor housing or a housing for a fixed display. The display 120 is disposed within the housing such that the display 120 is configured to display image to a user of the device 100. In the embodiment shown in Figure 1, the display 120 is a touch-sensitive display and is configured to sense a contact with the display 120, such as from a user's finger or a stylus. The display 120 is also configured to display a graphical user interface to the user, such as to provide status information to a user or to provide an interface to allow the user to access functions provided by the device 100.

The device 100 also comprises a processor 130 disposed within the housing 110. In the embodiment shown in Figure 1, the processor 130 is disposed within the device 100 such that is entirely disposed within the device 100, which is indicated by a dashed line. In some embodiments, however, the processor may not be disposed in the device 100. For example, in one embodiment, the device may comprises a desktop computer in communication with a monitor or LCD screen. Similarly, in some embodiments, the sensor 140 and the actuator 150 are entirely disposed within the device 100, though in some embodiments, part or all of the sensor 140 or actuator 150 may be visible to a user. In the embodiment shown, the processor 130 is in communication with the sensor 140, the actuator 150, and the display 120. The processor 130 is configured to receive sensor signals from the sensor 140, to output display signals to the display 120, and to output actuator signals to the actuator 150.

The processor 130 is further configured to determine a command associated with a user interface based on one or more sensor signals received from the sensor 140. For example, in the gear shift embodiment described above, the sensor 140 may send a sensor signal to the processor 130 indicating that the user has moved the cell phone 100 to the left. The processor 130 determines that a command should be generated to cause the gear shift knob displayed in the graphical user interface to move to the left. In the embodiment shown in Figure 1, the user may also cause a similar command to be issued by the processor by touching the display 120 at a location corresponding to the gear shift knob and dragging her finger to the left. Thus, the processor 130 may interpret sensor signals to generate commands associated with the graphical user interface. For example, the processor 130 may receive multiple sensor signals associated with movements of the cell phone 100 and then receive a sensor signal indicating a selection of a function.

The processor 130 is also configured to generate display signals based on the graphical user interface. Typically, a graphical user interface executes on a processor 130 as a part of or in concert with another application (or the operating system) and is displayed on a display device. Thus, the graphical user interface may cause the processor to generate display signals to cause the display 120 to display the graphical user interface. After the processor 130 issues a command associated with the graphical user interface, such as based on a sensed movement of the cell phone 110, the graphical user interface may update a state of the graphical user interface and then cause the processor 130 to generate a display signal to update the display of the graphical user interface.

In the embodiment shown in Figure 1, sensor 140 is disposed within the cell phone 100 and is configured to detect movements and changes in orientation of the cell phone 100. However, in some embodiments, part or all of the sensor 140, or a plurality of sensors, may be located externally on the device any may be contacted by a user. The sensor 140 shown comprises a gyroscopic sensor capable of detecting motion along three translational axes 160 and in rotation about the three translational axes 160. However, in other embodiments, other suitable sensors may be employed, such as one or more accelerometers for detecting translational or rotational movement along or about one or more axes. Another suitable sensor may comprise a receiver for receiving input from an external source, such as a light or radio source for determining a position of the device 100. For example, a plurality of radio transmitters may be arranged within a room and the sensor 140 may receive radio signals from the transmitters and determine a position and orientation based on the received radio signals.

In other embodiments, the sensor 140 may comprise a GPS sensor, a touch-sensitive input device (e.g. touch screen, touch-pad), a texture stylus, an imaging sensor, or some other type of sensor. The one or more sensors 140 may be configured to detect changes in acceleration, inclination, inertia, or location. For example, the device 100 may comprise an accelerometer configured to measure acceleration of the device 100. Or the cell phone 100 may comprise a location sensor, rotary velocity sensor, light sensor, pressure sensor, texture sensor, camera, microphone, or other type of sensor. And while some disclosed embodiments of the present invention are discussed with respect to sensed movement of the device, other sensed inputs may be used in addition to or instead of such sensed movement, including without limitation pressures, contacts, button presses, or audible signals. Such sensors may facilitate a user's interaction with a device 100 using only one hand.

The sensor 140 is also configured to transmit sensor signals 140 to the processor 130. The sensor signals may comprise one or more parameters associated with a position, a movement, an acceleration, or a "jerk" (i.e. the derivative of acceleration) of the device 100. For example, in one embodiment, the sensor 140 generates and transmits a sensor signal comprising a plurality of parameters, each parameter associated with a movement along or about one measured translational or rotational axis. In some embodiments of the present inventions, a sensor 140 may provide multi-touch sensing capabilities. For example, in one embodiment, a pressure sensor may be able to detect pressures at multiple locations on the pressure sensor and provide one or more sensor signals associated with the pressures at each of the multiple locations. Further, sensors may be located on the front, sides, or rear of a device in different embodiments, and each of which may provide one or more sensor signals associated with contacts or pressures. In some embodiments, the sensor outputs voltages or currents that the processor is programmed to interpret to indicate movement along one or more axes 160.

The processor 130 is also in communication with one or more actuators 150. Actuator 150 is configured to receive an actuator signal from processor 130 and output a haptic effect. After the processor 130 determines a haptic effect, it sends an actuator signal to actuator 150. The actuator signal is configured to cause actuator 150 to output the determined haptic effect. Actuator 150 may be, for example, a piezoelectric actuator, an electric motor, an electro-magnetic actuator, a voice coil, a linear resonant actuator, a shape memory alloy, an electro-active polymer, a solenoid, an eccentric rotating mass motor (ERM) or a linear resonant actuator (LRA).

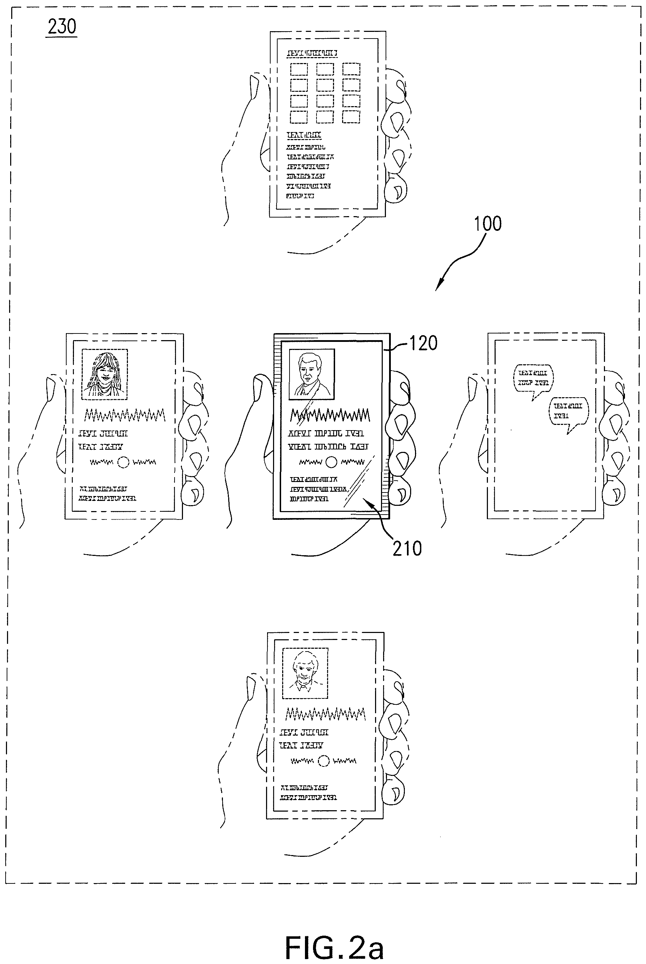

Referring now to Figure 2a, Figure 2a shows a graphical user interface according to one embodiment which is not forming part of the present invention. According to some embodiments not forming part of the present invention, the user interface shown in Figure 2a may be manipulated by a user using only a single hand to move the device 100. In the embodiment shown in Figure 2a, the device 100 of Figure 1 executes a user interface 210 useable to select and activate a function of the device 100. In the embodiment shown, the user interface comprises a virtual workspace 230, or virtual physical space, with dimensions exceeding the visible area of the display 120. In various embodiments, a virtual workspace 230 may comprise a one dimensional or multidimensional workspace. In some embodiments, the virtual workspace may be bounded, though in other embodiments it may be unbounded. To navigate within the virtual workspace, the user moves the device 100 in one or more directions to select a desired function.

For example, user may shake (or jog) the device in a direction approximately perpendicular to the plane of the device's display 120 (i.e. along a Z-axis or a surface normal), touch a touch sensitive display, or press a button on the device. By doing so, the device 100 may determine that it should activate the virtual workspace 230 and interpret sensed movement of the device 100 in an X or Y direction as corresponding to a virtual movement "within" the virtual workspace 230. The user may then move the device 100 within the virtual workspace 230 to select a desired function. To select the function, the user may again shake the device along the Z-axis in a tapping motion, touch the touch sensitive display 120, or press a button once the desired function is selected, such as by centering it within the display 120, or make another gesture associated with a selection function. In some embodiments, haptic effects may aid the user in determining when a function has been selected as will be described in more detail below. Alternatively, the user may opt to not execute a function and may indicate to the device 100 that the device 100 should no longer interpret movement of the device as movement within the virtual workspace 230.

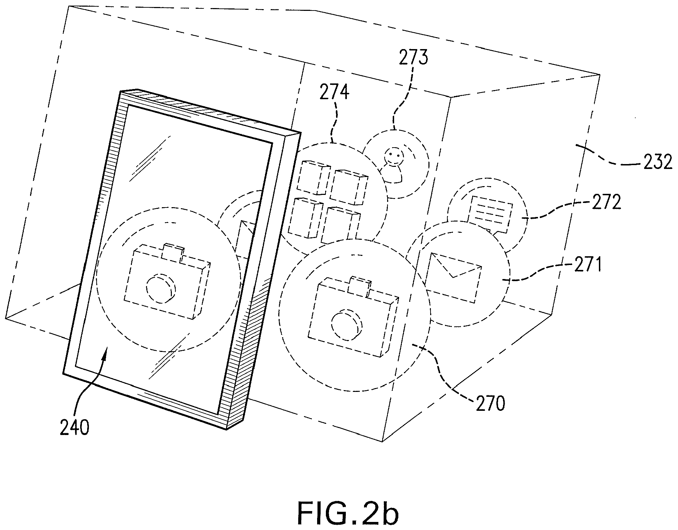

In a related embodiment shown in Figure 2b, a user interface 240 may comprise a three-dimensional virtual workspace 232, such as in a virtual physical space 232, such that the user may move the device in any of an X, Y, or Z axis to select a function to execute. In such embodiments, the user may enable or disable the virtual workspace 232 using one or more gestures, such as shaking the device 100 from side to side, tapping the touch-sensitive display 120, squeezing pressure sensors on the sides or rear of the device 100, speaking a command into a microphone on the device, or pressing a button on the device 100. Additionally, embodiments of the present invention for interfacing with such a three-dimensional virtual physical space may comprise three-dimensional objects rather than two-dimensional icons that a user may select and activate.

For example, in one embodiment of the present invention, a plurality of functions may each be represented by virtual physical objects 270-274, such as balls or blocks, in a three-dimensional virtual physical space 232. In one embodiment, when beginning to navigate within the virtual physical space 232, the user stands at the origin of the X, Y, and Z axes such that objects 270-274 arranged within the virtual physical space 232 are positioned relative to the user. As such, when navigating within the virtual physical space 232, the user may move away from the origin, such as by taking a step forward or backward, or by moving the device 100 in various directions, which may be detected by a sensor within the device 100. Such movement may result in the user moving away from the origin point. However, the user may be able to reset the graphical user interface 240 to re-center it on the user. In addition, upon re-activating the virtual physical space 232 at a later time, the user's location may be reset to the origin.

In embodiments of the present invention providing a graphical user interface 240 comprising a virtual physical space 232, the user may move the device to various locations and orientations to view different virtual physical objects 270-274, such as balls or blocks, representing applications and data "floating" in the virtual physical space. A user can arrange the location of the various virtual physical objects 270-274 such as by selecting an object and dragging it to new location within the virtual physical space 232. For example, the user may arrange the objects 270-274 such that objects representing frequently-accessed functions are positioned "near" the user, i.e. the objects are positioned at coordinates close to the origin of the X, Y, and Z axes, and objects representing less frequently-accessed functions are positioned farther from the user's location. Thus, accessing frequently-used functions may be easier because less movement of the device 100 may be necessary.

In some embodiments, users may interact with the virtual physical space 232 or virtual physical objects 270-274 through other types of movements or gestures, which are detected by the one or more sensors 140. As the device 100 is tilted, shaken, or otherwise moved, the one or more sensors may detect these movements, and generate a sensor signal based at least in part on the movement of the communication device. In one embodiment, an accelerometer sensor is configured to detect the inclination and acceleration of the device 100. As the device 100 is tilted, the accelerometer can be configured to send signals to the processor based at least in part on the tilt or acceleration of the device 100. In another embodiment, the display 120 comprises a touch-sensitive display configured to detect gestures or position inputs on the touch-sensitive display. As a finger is positioned or dragged on the touch-sensitive display, the touch-sensitive display may generate signals based at least in part on the finger movement, such as the speed or pressure of the finger movement. In still a further embodiment, the device 100 comprises a pressure sensor on one or more faces of the device, such as on the sides or rear of the device 100 or on the display. A user may touch such a pressure sensor at one or more locations to select or interact with the virtual physical space 230 or virtual physical objects 270-274.

In one embodiment, upon receiving a sensor signal, the processor 130 is configured to determine an interaction with the virtual physical space based at least in part on the sensor signal. For example, navigation through the virtual physical space may be based at least in part on features extracted from sensor signals. For instance, tilting the device 100 forward may be translated into a forward movement in the virtual physical space. Moving the device 100 to the right or the left may be translated into looking right or left in the virtual physical space.

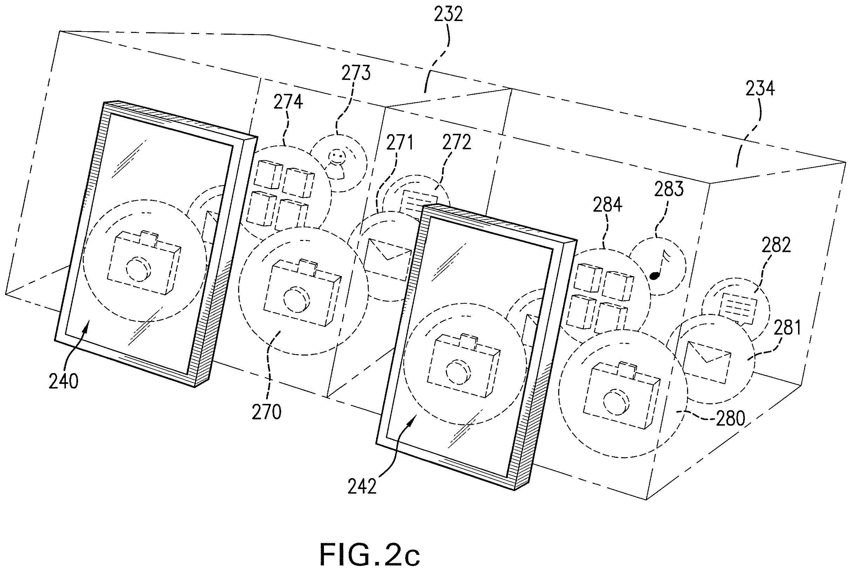

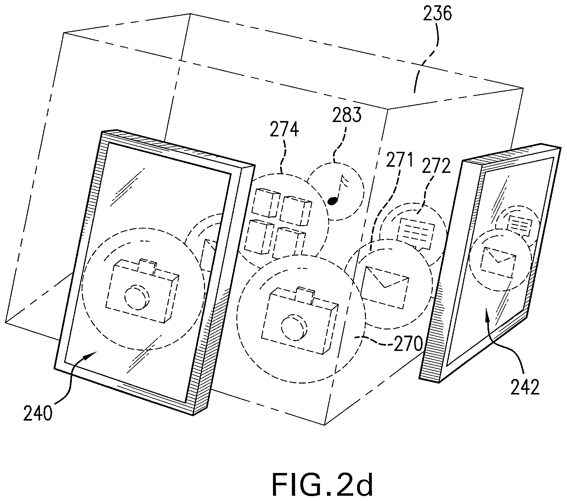

In some embodiments, two users may connect to access the same virtual physical space, or may merge their respective virtual physical spaces. For example, Figures 2c and 2d show two users that have connected their respective virtual physical spaces. Such embodiments may facilitate sharing of data or applications between different devices. For example, in one embodiment, two or more users may activate virtual physical spaces 232, 243 on their respective devices and then connect to each other using functionality built into their graphical user interfaces. In such an embodiment, each user may be able to view a virtual physical space 232, 234 representing the contents of their device and view a virtual physical space 232, 234 of the other user's (or users') devices as well as his own contents. For example, in one embodiment shown in Figure 2c, at one boundary of a first user's virtual physical space 232, a partially-transparent screen may appear to indicate a boundary between the first user's virtual physical space 232 and another user's virtual physical space 234. In another embodiment, when two (or more) users connect their respective virtual physical spaces as shown in Figure 2d, a new virtual physical space 236 may be created containing some or all of the contents of each user's virtual physical space. Ownership of particular virtual physical objects 270-274, 280-284 may be indicated visually, haptically or audibly. For example, when the first user navigates to an object 283 owned by the second user, the first user may experience a different haptic effect than she would feel when navigating to one of her own virtual physical objects 270-274.

In one embodiment, a first user may activate a first virtual physical space 232 using his device and a second user may active a second virtual physical space 234 using her device. The first user may manipulate his device to transmit a request to the second user's device to connect the first virtual physical space 232 with the second virtual physical space 234. The second user may then accept the request and the two devices may connect their respective virtual physical spaces 232, 234. In one embodiment, the first user may be able to see an extension to the first virtual physical space 232, where the extension comprises the second virtual physical space 234. Similarly, the second user may be to see an extension to the second virtual physical space 234, where the extension comprises the first virtual physical space 232. Thus, the first and second users may be able to view or navigate within both the first and second virtual physical spaces. In one embodiment, the first and second virtual physical spaces 232, 234 may merge to form a third virtual physical space 236 comprising some or all of the objects 270-274 from the first virtual physical space 232 and some or all of the objects 280-284 from the second virtual physical space 234.

After the virtual physical spaces 232, 234 have been connected, the users may navigate within the shared (third) virtual physical space 236 or the appended first and second virtual physical spaces 232, 234 to transfer data, such as to share data stored on one user's device or to share a copy of an application. For example, a first user may see an object 283 representing a song on the second user's device within the second virtual physical space 234, or within the shared (third) virtual physical space 236. The first user may maneuver the device 100 to select and listen to the song object 283, or request permission to listen to the song object 283. The second user's device may receive the request and the second user may be notified, such as in the form of a haptic effect, a visual cue, or an audible cue. The second user may then manipulate her device to either accept the request or deny the request. Upon receiving permission from the second user, or after selecting the song 283, the song 283 is played for the first user on his device. After listening to the song, the first user may then select and drag the song into a part of the virtual physical space, such as virtual physical space 232, representing the objects 270-274 stored on the first user's device or may make a gesture to indicate the object should be copied to the first user's device. Users may similarly share other applications or data, such as pictures or videos, by navigating within the shared virtual physical space 236 and interacting with various virtual physical objects 270-274, 280-284.

In one embodiment, multiple users may access the same virtual physical space 236 and interact using a shared application or a common application running on each of the users' devices. For example, in one embodiment, each user may execute a chat application 272 that allows the users to chat in a chat room. The chat room may be represented in a shared virtual space accessible by each of the users. The users may generate virtual messages in their own private virtual physical space, such as by generating virtual physical objects representing the message and passing them into the shared virtual physical space representing the chat room. For example, a user may generate a message and encapsulate it within a virtual message object and apply physical characteristics to the virtual message object, such as by dragging it at high speed towards the chat room. When the virtual message object enters the chat room, each of the other users will receive the message with the physical attributes. In addition, users may pass virtual message objects to other individual users by passing the virtual message object into another user's virtual private space rather than to the chat room, simulating a whisper function available in many conventional chat rooms. Such interactions may allow a richer chat experience to the various users.

Returning to the virtual physical space metaphor, in some embodiments, a user may interact with the virtual physical space 230-236 by moving the device 100 in different directions or through different orientations. However, in some embodiments, a user may interact with the device 100 having different types of sensors 140. For example, in one embodiment, a device 100 may comprise a multi-touch pressure sensor located on a rear surface of a device 100, such as the surface opposite the device's display. A user may touch the pressure sensor 140 at one or more locations and receive visual feedback of the touches as displayed points or cursors on the display at locations corresponding to the locations of contact with the sensor 140. The user may then interact with the sensor 140 to provide gestures or other inputs to navigate a graphical user interface displayed by the device 100. In some embodiments, the display may be touch-sensitive and thus, contact with a touch-sensitive sensor on the rear of the device may provide control over the graphical user interface as though the user were contacting the touch-sensitive display. In some embodiments, though, inputs made using the touch-sensitive sensor on the rear of the device 100 may allow for different commands than are available using the touch-sensitive display. In some embodiments, such multi-touch or other sensors may be located on one or more sides of the device 100 in addition to, or instead of, a sensor on the rear surface of the device 100.

In some embodiments, while a user is interacting with the virtual physical space, haptic or sound effects generated by the processor may simulate an interaction with the virtual physical space. For example, when the user navigates from one virtual physical object to another, the processor may, in addition to updating the display of the graphical user interface, generate one or more actuator signals configured to cause the actuator to output a haptic effect to the user. For example, the user may experience a small "pop" or vibration upon arriving at a new function. In one embodiment, when one user sends a virtual physical object, such as a picture, to another user in the virtual physical space, vibrations and sounds may indicate that the picture has been sent by a first user and received by a second user. The transmission of such virtual physical objects may also cause haptic effects to be generated based on properties of the objects, such as velocity, mass (e.g. "heavier" objects may have larger file sizes), or urgency. A first device, such as device 100, may receive a virtual physical object from a second device and output a haptic effect or audible sound to indicate that an object has been received. Still further embodiments of graphical user interfaces using virtual physical spaces would be apparent to one of skill in the art.

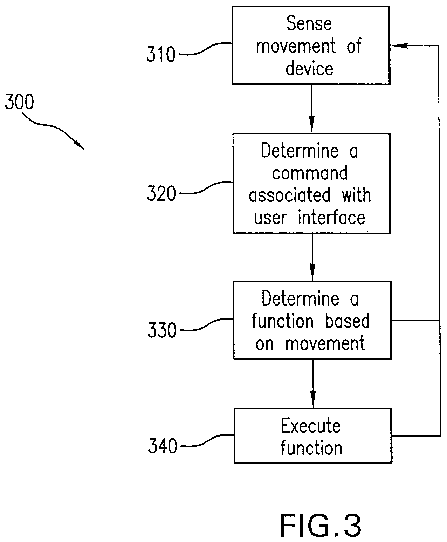

Referring now to Figure 3, Figure 3 shows a method for providing a graphical user interface according to one embodiment of the present invention. In the embodiment shown in Figure 3, a method 300 comprises a plurality of steps for determining a user interaction with a user interface.

In one embodiment of the present invention, which is discussed with respect to the device shown in Figure 1 and the graphical user interface shown in Figure 2, a method 300 begins in step 310 when a sensor (not shown) senses a movement of the device 100. For example, in one embodiment, the device 100 comprises a gyroscopic sensor 140 that detects a movement of the device 100 along a Z-axis. The sensor generates and outputs a sensor signal comprising information describing the movement along the Z-axis, such as and without limitation distance, speed, direction, acceleration, rate of acceleration (or jerk), orientation, rotary velocity, rotary acceleration (e.g. torque), or duration. After the sensor outputs the sensor signal, the method proceeds to step 320.

At step 320, a processor 130 of one embodiment of the device 100 shown in Figure 1 receives the sensor signal and determines a command associated with the user interface 210 based at least in part on the sensor signal. For example, the processor 130 determines a movement within the virtual workspace (or virtual physical space) 230-236. For example, in one embodiment, the processor 130 receives a sensor signal indicating a movement of the device 100 to the right. The processor 130 determines that the user has changed the view into the virtual workspace 230 by moving the virtual window into the workspace a specific distance to the right. In other embodiments, however, such a movement may be interpreted differently. For example, in one embodiment, a movement of the device 100 to the right may be interpreted by the processor 130 to move to the next available object to the right of the currently-selected object.

Further movements of the device 100 may be interpreted in different ways. For example, a user may rotate the device to the left. The processor may interpret the movement as a rate-control interaction with a virtual physical space 230-236 or a rotation of the view into the virtual physical space 230-236. In embodiments of the present invention, rate-control refers to a constant movement at a rate indicated by the position of the device 100. For example, if the user rotates the device 100 to the right by 20 degrees, the view into a virtual workspace 230-236 may move to the right at one rate. If the user increases the rotation to 45 degrees, the view may move to the right at an increased rate. In contrast, a position control mode may result in movement within the virtual workspace 230-236 proportional to a movement of the device 200 in a particular direction. For example, if the user moves the device 100 three inches to the left, a corresponding view into the virtual workspace 230-236 may move to the left by the equivalent of 12 inches within the virtual workspace 230-236. Still further methods of mapping movement of the device 100 into the virtual workspace 230-236 may be employed.

For example, in one embodiment, the processor 130 may determine that the user has activated a virtual workspace 230-236. In such an embodiment, the sensor 140 may sense a quick movement of the device 100 and transmit a sensor signal to the processor 130. The processor 130 receives the sensor signal and determines that the virtual workspace 230-236 has been activated based at least in part on the sensor signal. If the processor 130 has already determined that the user is interacting with the virtual workspace 230-236, the processor 130 may determine a movement within the virtual workspace 230-236 based at least in part on the sensor signal. For example, in one embodiment, the sensor signal may indicate a sharp, jerky motion of the device 100 in a direction. In such a case, the processor 130 may determine that the user is attempting to scroll quickly in the direction and may simulate inertial movement within the virtual workspace 230-236 which is reduced over time to a halt by a simulated frictional force. In another embodiment, however, the processor 130 may determine that such a movement indicates a movement to the next available function in the direction of the movement.

After the processor has determined a command associated with the user interface 210, the method 300 proceeds to step 330. Alternatively, the user may further manipulate the device 100. In such a case, the method returns to step 310.

At step 330, the processor 130 determines a function based on the movement associated with the user interface. For example, after the processor 130 has determined the movement within the virtual workspace 230-236, the processor 130 determines whether a function has been identified or selected. For example, if the movement caused the view into the virtual workspace 230-236 to center on a virtual object, the processor 130 may determine that the virtual object has been selected. After the processor 130 has determined a selected function based on the movement, the method 300 proceeds to step 340.

At step 340, the processor 130 receives a further input to indicate that the function should be executed. For example, in one embodiment, a user may press a button, touch an area on the touch-sensitive display 120 on the device 100, or squeeze a pressure sensor to cause the processor 130 to execute the function. In another embodiment, the user may move the device 100 in a manner associated with an execution gesture. For example, the user may make a tapping motion with the device 100 to indicate the selected function should be executed. Once the processor 100 receives an indication that the selected function should be executed, the processor 130 executes the function. After the function has been executed, the method returns to step 310 and the user may further manipulate the device to perform additional tasks.

In addition to graphical user interfaces relating to virtual physical spaces, additional embodiments of the present invention provide graphical user interfaces configured to allow easy access to desired functions or allow easy manipulation of the user interface using only one hand.

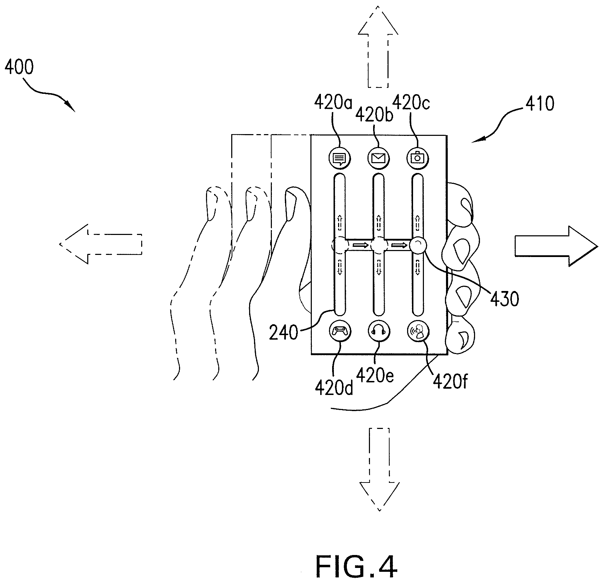

Referring now to Figure 4, Figure 4 shows a graphical user interface according to one embodiment of the present invention. In the embodiment shown, a device 400 comprises a user interface 410 having a plurality of icons 420a-f that are selectable by a user to perform various functions. For example, the user interface includes an icon 420b corresponding to an email function such that when the icon is selected by the user, an email application is executed and becomes useable. To assist the user in navigating the user interface 410, the user interface 410 comprises a gear shift knob 430 that is manipulatable by the user within a shift pattern 440 to select a function to execute. In one embodiment, the user may touch the gear shift knob 430 and drag the knob to the desired function. In addition, the user may simply shake (or jog) the device 200 in the desired direction within the shift pattern 440 to move the shift knob 430. In such an embodiment, a sensor (not shown), such as a gyroscopic or other suitable sensor, disposed within the device 400 is configured to detect movement of the device 400 and to output a sensor signal indicating the movement. A processor (not shown) disposed within the device 400 is configured to receive the sensor signal and to determine a movement of the shift knob 430 within the shift pattern that corresponds with the movement of the device 400. For example, if the user jogs the device 400 to the left, the processor receives a sensor signal indicating movement of the device 400 to the left and determines a corresponding movement of the shift knob.

Note that because in some embodiments the device 400 may be held in a variety of orientations, a direction of movement may vary according to an orientation of the device 400. For example, in the embodiment shown, the user is holding the device 400 in a first orientation. However, the user may opt to rotate the device 400 clockwise by 90 degrees. In such a case, the user interface may rotate 90 degrees in the opposite direction such that the shift pattern retains the same orientation with respect to the user, though in a "landscape" view rather than the previous "portrait" view.

In one embodiment, the user shift pattern may comprises a two-dimensional pattern corresponding to orthogonal X and Y axes in the plane of the user interface. In such an embodiment, the user activates a function by shaking (or jogging) the device in a third dimension, such as up or down, to indicate the function should be executed. Such an embodiment may be useful to a user that may not have two hands available to manipulate the device 400 - e.g. one hand to hold the device 400 and a second hand to select a function. In such a situation, the user may be able manipulate the user interface to select and activate functions using only one hand.

In a related embodiment, a device 400 may comprise a multi-touch sensor located on the rear of the device 400. In such an embodiment, a user may use one or more fingers to send commands to the device 400 to interact with the graphical user interface. A visual indication of the location of the user's finger may be provided by a cursor or stylized fingertip icon. In some embodiments, the device 400 may provide a haptic indication of the location of the user's finger, such as a vibration.

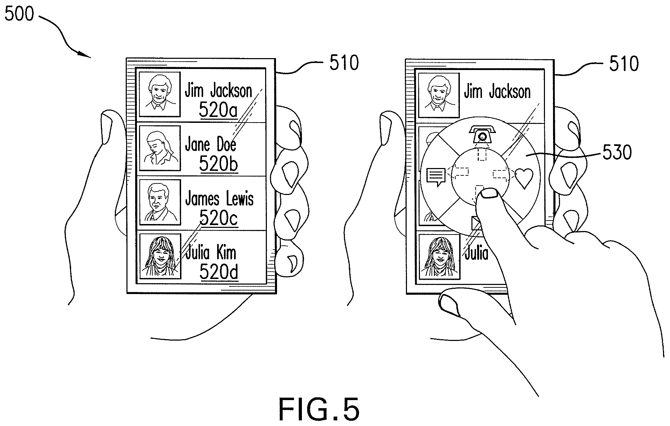

Referring now to Figure 5, Figure 5 shows a graphical user interface 500 according to one embodiment of the present invention. In the embodiment shown in Figure 5, a user has navigated to a list of contacts 520a-d stored within the device 510. For each contact, the user may be able to access a variety of functions to be performed, such as placing a phone call, sending a text message, sending an email, or editing the user's contact information. In the embodiment shown in Figure 5, the user may touch the touch-sensitive display of the device 510 at a position corresponding to a displayed contact. When the touch-sensitive screen detects the contact, it transmits a signal to a processor (not shown) in the device 510, which causes a menu 530 to appear having a plurality of functions arranged in a ring around the user's finger. In such an embodiment, the user may then move or flick her finger in the direction of the desired function, or may remove her finger from the touch-screen to cause the menu 530 to disappear.

In a related embodiment using motion sensing, the user may scroll through the list of contacts 530a-d by shaking the device 510 in a direction and then select a contact by jogging the device when a cursor, selector box, or other graphical user interface element indicates the desired contact is selected. The user may then cause the circular menu 530 to appear and may jog the device 510 in the direction of the desired function, or may shake the device to cause the menu 530 to disappear. Such embodiments may provide a simpler and more intuitive user interface for interacting with the device 510. Such a menu system 530 may be used with other functions available within the device or when navigating within a virtual physical space.

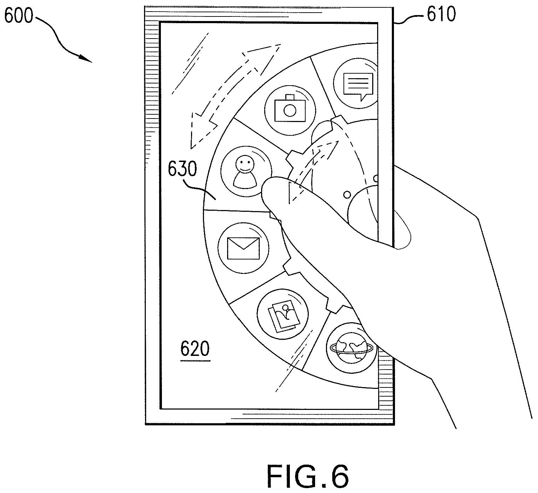

Referring now to Figure 6, Figure 6 shows a graphical user interface 600 according to one embodiment of the present invention. In the embodiment shown in Figure 6, a graphical user interface comprises a virtual rotary wheel having a plurality of icons arranged along the wheel. Such a graphical user interface may be advantageous as a user may efficiently navigate the interface using only a single hand. For example, a user may grasp the device 610 as shown in Figure 6 such that the user's thumb may interact with the device's touch-sensitive display 620. The user may use his thumb to rotate the wheel 630 to bring an icon representing a desired function into a position easily reachable by his thumb. The user may then execute the desired function, such as by tapping the icon with his thumb. In a related embodiment, a device may comprise a touch-sensitive sensor located on a side of a device, or a rear of a device, that a user may manipulate to interact with the graphical user interface 600. In such embodiments, other types of data may be accessed by such a wheel, for example contacts, photos, music, or videos.

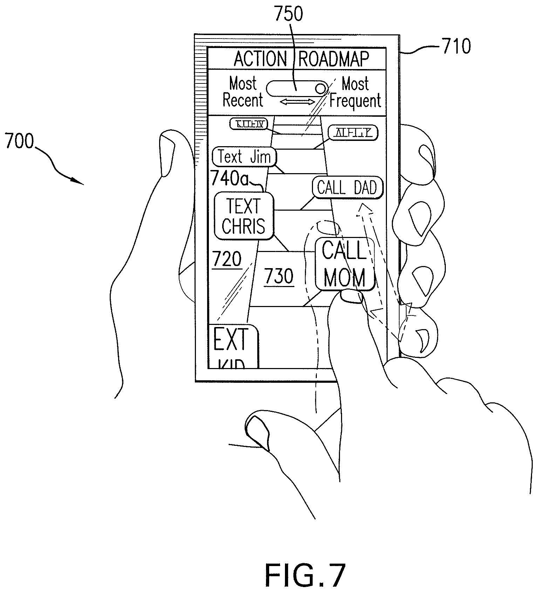

Referring now to Figure 7, Figure 7 shows a graphical user interface 700 according to one embodiment of the present invention. In the embodiment shown in Figure 7, a plurality of functions (e.g. function 740a) are arrayed in a list 730 in a simulated depth dimension. For example, items along the list may be displayed as closer or farther from the user and the user may scroll through the list by touching the touch-sensitive display 720 of the device 710 and dragging her finger in one direction or another. In another embodiment, the user may interact with a touch-sensitive sensor, such as a multi-touch sensor, located on a different part of the device 710, such as the side or back of the device.

Further, the user may select specific functions to be included on the list, such as functions that call a specific number or send a text to a specific user, rather than more generic applications. These specific functions may be selected manually for inclusion by the user, or may be managed automatically by the device based on a parameter, or may be managed both manually and automatically. When automatically arranging the specific functions, the device 610 may select the most frequently used functions or order the functions based on some other metric, for example the likelihood the user will select a given function based on the user's previous habits. In addition, the user may be able to toggle between two or more different automated arrangements, such as by using a switch 750.

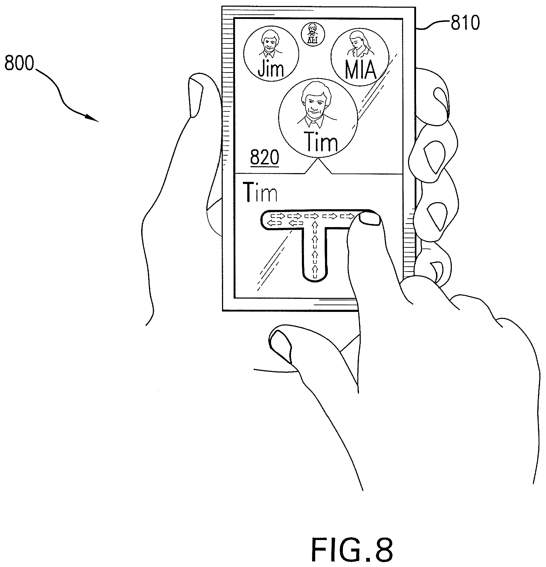

Referring now to Figure 8, Figure 8 shows a graphical user interface 800 according to one embodiment of the present invention. In the embodiment shown in Figure 8, the graphical user interface 800 provides an unconventional searching function. While conventional search functions require a user to type a word or several characters to cause a search to execute, in the embodiment shown in Figure 8, the user may activate a search simply by writing letters on a touch-sensitive screen 820 or by moving the device 810 in the shape of various letters to indicate terms to be searched. The processor (not shown) may begin searching for items, such as applications, data files, contacts, etc., after the user has indicated the first letter of the search term. As additional letters are detected, the processor may further narrow the list of potential search results. As items meeting the search criteria are found, the device 810 may display to the results according to various graphical user interfaces disclosed herein, such as virtual objects within a virtual physical space. The user may then navigate amongst the search results and select the desired object.

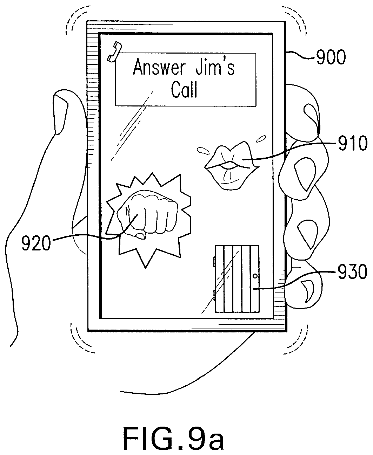

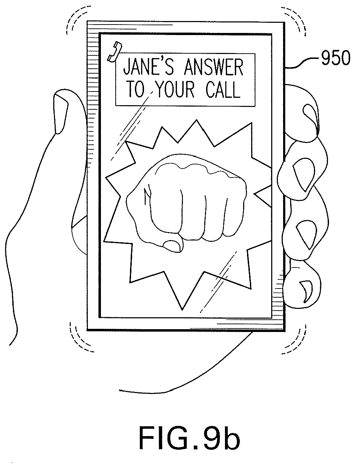

Referring now to Figures 9a-b, Figures 9a-b shows a graphical user interface according to one embodiment of the present invention. In the embodiment shown in Figure 9a, a user may respond to an incoming phone call or text message using unconventional responses. For example, typically, when a user receives a phone call, the user may answer the call or ignore the call, such as by allowing the phone to ring or silencing the ringer. However, embodiments of the present invention provide richer options for responding to such events.

In one embodiment of the present invention, when a phone call is received, the device 900 may present the user with a plurality of options 910-930 arranged according to various embodiments of the present invention, such as those disclosed herein. The options may comprise options to respond to the message or ignore the call but send a response. For example, if a user receives a call from a boyfriend but is unable to answer the phone, the user may select an icon of a pair of lips. The call will be ignored, but a message will be sent to the originator and will be displayed on the screen of the device 950 or output as a haptic effect. Alternatively, if the user is angry with her boyfriend, she may select an icon with a fist or a closed door to ignore the call or to respond to a text message. In one embodiment, the caller then would receive a sharp, strong haptic effect along with a picture of a fist to indicate the call was ignored, or an animation of a door closing with a haptic effect to indicate the door slamming shut. In some embodiments, a user may interact with one or more sensors located on the device, such as pressure sensors located on the sides or rear of the device, or by moving the device to transmit a response to the caller, either in response to the phone call or during the phone call. For example, in one embodiment, a device may comprise pressure sensors located on the sides of the device. Using such an embodiment, a user may squeeze the device to send a haptic signal to the other party, such as a hug.

Embodiments of the present invention can be implemented in digital electronic circuitry, or in computer hardware, firmware, software, or in combinations of these technologies. In one embodiment, a computer may comprise a processor or processors. The processor comprises a computer-readable medium, such as a random access memory (RAM) coupled with the processor. The processor executes computer-executable program instructions stored in memory, such as executing one or more computer programs for messaging. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise or be in communication with media, for example computer-readable media, which stores instructions that, when executed by the processor, cause the processor to perform the steps described herein as carried out or facilitated by a processor. Embodiments of computer-readable media may comprise, but are not limited to, an electronic, optical, magnetic, or other storage or transmission device capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor and the processing described may be in one or more structures and may be dispersed through one or more structures. The processor may comprise a code for carrying out one or more of the methods (or parts of methods) described herein.

### General

The foregoing description of the embodiments, including preferred embodiments, of the invention has been presented only for the purpose of illustration and description and is not intended to be exhaustive nor to limit the invention to the precise forms disclosed. Numerous modifications and adaptations thereof will be apparent to those skilled in the art without departing from the scope of the invention.

Reference herein to "one embodiment" or "an embodiment" means that a particular feature, structure, operation, or other characteristic described in connection with the embodiment may be included in at least one implementation of the invention. The invention is not restricted to the particular embodiments described as such. The appearance of the phrase "in one embodiment" or "in an embodiment" in various places in the specification does not necessarily refer to the same embodiment. Any particular feature, structure, operation, or other characteristic described in this specification in relation to "one embodiment" may be combined with other features, structures, operations, or other characteristics described in respect of any other embodiment.

Use of the conjunction "or" herein is intended to encompass both inclusive and exclusive relationships, or either inclusive or exclusive relationships as context dictates. does not necessarily refer to the same embodiment. Any particular feature, structure, operation, or other characteristic described in this specification in relation to "one embodiment" may be combined with other features, structures, operations, or other characteristics described in respect of any other embodiment.

Use of the conjunction "or" herein is intended to encompass both inclusive and exclusive relationships, or either inclusive or exclusive relationships as context dictates.

## Claims

1. A device (100, 200, 400, 510, 610, 710, 810, 900) comprising:
a housing (110) configured to be grasped by a user (110);
a display (120, 620, 720) disposed in the housing, the display configured to display a graphical user interface (210, 240, 410, 500, 600, 700, 800);
a sensor (140) disposed in the housing, the sensor configured to detect a movement of the housing in a degree of freedom;
a processor (130) disposed in the housing and in communication with the display and the sensor, the processor configured to:
receive a sensor signal from the sensor, the sensor signal comprising a parameter associated with the movement (310);
determine (320) a command associated with the graphical user interface based, at least in part, on the parameter;
determine (330) a function to be executed based, at least in part, on the command, and
execute (340) the function;
wherein the graphical user interface comprises a virtual physical space (230, 232, 234, 236);
wherein the virtual physical space (230, 232, 234, 236) comprises a first virtual physical space (232), the graphical user interface comprises a first graphical user interface, and the processor (130) is further configured to:
receive a signal from a second device indicating a request to connect the second device to the first virtual physical space, the second device executing a second graphical user interface comprising a second virtual physical space (234);
**characterised in that** the processor is further configured to:
connect the first virtual physical space to the second virtual physical space such that a user of the first device can view both the first and second virtual physical spaces and a user of the second device can view both the first and second virtual physical spaces;
receive a second sensor signal from the sensor (140), the second sensor signal indicating a second movement of the device; and
determine an interaction between the first graphical user interface (210, 240, 410, 500, 600, 700, 800) and the second virtual physical space based on the second movement;
the command comprises a selection of a virtual physical object (270-274, 280-284) within the second virtual physical space (234); and
the function comprises any of:
i) a move function or a copy function to move the virtual physical object (270-274, 280-284) from the second virtual physical space (234) to the first virtual physical space (232) or to copy the virtual physical object from the second virtual physical space to the first virtual physical space; or
ii) a view function to view the contents of a virtual physical object.

2. The device (100, 200, 400, 510, 610, 710, 810, 900) of claim 1, wherein the virtual physical space (230, 232, 234, 236) comprises any of:
i) a plurality of virtual physical objects (270-274, 280-284);
ii) a two-dimensional virtual physical space;
iii) a three-dimensional virtual physical space.

3. The device (100, 200, 400, 510, 610, 710, 810, 900) of any preceding claim, further comprising an actuator (150) and wherein the processor (130) is further configured to generate an actuator signal based on the movement and to output the actuator signal to the actuator to cause the actuator to output a haptic effect.

4. The device (100, 200, 400, 510, 610, 710, 810, 900) of claim 1 wherein the processor (130) is further configured to connect the first (232) and second virtual physical spaces (234) by:
A) disposing a partially transparent screen at a boundary between the first virtual physical space and the second virtual physical space; or
B) merging the first virtual physical space and the second virtual physical space to create a new third virtual physical space (236);
such that the user of the device is able to view a virtual physical space representing the contents of the device and view the virtual physical space of the second device.

5. A method (300) executed in the device of claim 1, comprising:
receiving a sensor signal from the sensor (140), the sensor signal comprising a parameter associated with a movement (310) of the device;
determining (320) a command associated with the graphical user interface based, at least in part, on the parameter;
determining (330) a function to be executed based, at least in part, on the command; and
executing (340) the function
wherein the graphical user interface comprises a virtual physical space (230, 232, 234, 236);
wherein the virtual physical space (230, 232, 234, 236) comprises a first virtual physical space (232), the graphical user interface comprises a first graphical user interface (210, 240, 410, 500, 600, 700, 800) further comprising:
receiving a signal from a second device indicating a request to connect the second device to the virtual physical space, the second device displaying a second graphical user interface comprising a second virtual physical space (234);
**characterised in**:
connecting the virtual physical space to the second virtual physical space such that a user of the first device can view both the first and second virtual physical spaces and a user of the second device can view both the first and second virtual physical spaces;
receiving a second sensor signal from the sensor, the sensor signal indicating a second movement of the device; and
determining an interaction between the first graphical user interface and the second virtual physical space based on the second movement;
the command comprises a selection of a virtual physical object (270-274, 280-284) within the second virtual physical space (234); and
the function comprises any of:
i) a move function or a copy function to move the virtual physical object (270-274, 280-284) from the second virtual physical space (234) to the first virtual physical space (232) or to copy the virtual physical object from the second virtual physical space to the first virtual physical space; or
ii) a view function to view the contents of a virtual physical object.

## Patentansprüche

1. Vorrichtung (100, 200, 400, 510, 610, 710, 810, 900), Folgendes umfassend:
ein Gehäuse (110), das dafür konfiguriert ist, von einem Benutzer (110) ergriffen zu werden;
eine Anzeige (120, 620, 720), die in dem Gehäuse angebracht ist, wobei die Anzeige dafür konfiguriert ist, eine grafische Benutzerschnittstelle (210, 240, 410, 500, 600, 700, 800) anzuzeigen;
einen Sensor (140), der in dem Gehäuse angebracht ist, wobei der Sensor dafür konfiguriert ist, eine Bewegung des Gehäuses in einem Freiheitsgrad zu erfassen;
einen Prozessor (130), der in dem Gehäuse angebracht ist und mit der Anzeige und dem Sensor in Verbindung steht, wobei der Prozessor dafür konfiguriert ist:
ein Sensorsignal von dem Sensor zu empfangen, das Sensorsignal einen Parameter umfassend, der der Bewegung (310) zugeordnet ist;
einen Befehl zu bestimmen (320), der der grafischen Benutzerschnittstelle zugeordnet ist, basierend, zumindest teilweise, auf dem Parameter;
eine auszuführende Funktion basierend, zumindest teilweise, auf dem Befehl zu bestimmen (330) und die Funktion auszuführen (340);
wobei die grafische Benutzerschnittstelle einen virtuellen physischen Raum (230, 232, 234, 236) umfasst;
wobei der virtuelle physische Raum (230, 232, 234, 236) einen ersten virtuellen physischen Raum (232) und die grafische Benutzerschnittstelle eine erste grafische Benutzerschnittstelle umfasst und der Prozessor (130) ferner dafür konfiguriert ist:
ein Signal von einer zweiten Vorrichtung zu empfangen, das eine Anforderung angibt, die zweite Vorrichtung mit dem ersten virtuellen physischen Raum zu verbinden, wobei die zweite Vorrichtung eine zweite grafische Benutzerschnittstelle ausführt, umfassend einen zweiten virtuellen physischen Raum (234);
**dadurch gekennzeichnet, dass** der Prozessor ferner dafür konfiguriert ist:
den ersten virtuellen physischen Raum mit dem zweiten virtuellen physischen Raum zu verbinden, sodass ein Benutzer der ersten Vorrichtung sowohl den ersten als auch den zweiten virtuellen physischen Raum betrachten kann und ein Benutzer der zweiten Vorrichtung sowohl den ersten als auch den zweiten virtuellen physischen Raum betrachten kann;
ein zweites Sensorsignal von dem Sensor (140) zu empfangen, wobei das zweite Sensorsignal eine zweite Bewegung der Vorrichtung angibt; und
eine Interaktion zwischen der ersten grafischen Benutzerschnittstelle (210, 240, 410, 500, 600, 700, 800) und dem zweiten virtuellen physischen Raum, basierend auf der zweiten Bewegung, zu bestimmen;
der Befehl eine Auswahl eines virtuellen physischen Objekts (270-274, 280-284) innerhalb des zweiten virtuellen physischen Raums (234) umfasst; und
die Funktion eines von Folgenden umfasst:
i) eine Bewegungsfunktion oder eine Kopierfunktion, um das virtuelle physische Objekt (270-274, 280-284) vom zweiten virtuellen physischen Raum (234) zum ersten virtuellen physischen Raum (232) zu bewegen oder das virtuelle physische Objekt vom zweiten virtuellen physischen Raum zum ersten virtuellen physischen Raum zu kopieren; oder
ii) eine Betrachtungsfunktion, um den Inhalt eines virtuellen physischen Objekts zu betrachten.

2. Vorrichtung (100, 200, 400, 510, 610, 710, 810, 900) nach Anspruch 1, wobei der virtuelle physische Raum (230, 232, 234, 236) eines von Folgenden umfasst:
i) mehrere virtuelle physische Objekte (270-274, 280-284);
ii) einen zweidimensionalen virtuellen physischen Raum;
iii) einen dreidimensionalen virtuellen physischen Raum.

3. Vorrichtung (100, 200, 400, 510, 610, 710, 810, 900) nach einem der vorangehenden Ansprüche, ferner umfassend einen Aktuator (150) und, wobei der Prozessor (130) ferner konfiguriert ist, um ein Aktuatorsignal, das auf der Bewegung basiert, zu erzeugen und das Aktuatorsignal an den Aktuator auszugeben, um den Aktuator zu veranlassen, einen haptischen Effekt auszugeben.

4. Vorrichtung (100, 200, 400, 510, 610, 710, 810, 900) nach Anspruch 1, wobei der Prozessor (130) ferner dafür konfiguriert ist, den ersten (232) und den zweiten virituellen physischen Raum (234) zu verbinden durch:
A) das Anbringen eines teilweise transparenten Bildschirms an einer Grenze zwischen dem ersten virtuellen physischen Raum und dem zweiten virtuellen physischen Raum; oder
B) das Zusammenfügen des ersten virtuellen physischen Raumes und des zweiten virtuellen physischen Raumes, um einen neuen dritten virtuellen physischen Raum (236) zu schaffen;
so dass der Benutzer der Vorrichtung einen virtuellen physischen Raum, der den Inhalt der Vorrichtung darstellt, und den virtuellen physischen Raum der zweiten Vorrichtung betrachten kann.

5. Verfahren (300), ausgeführt in der Vorrichtung nach Anspruch 1, Folgendes umfassend:
das Empfangen eines Sensorsignals von dem Sensor (140), das Sensorsignal einen Parameter umfassend, der einer Bewegung (310) der Vorrichtung zugeordnet ist;
das Bestimmen (320) eines Befehls, der der grafischen Benutzerschnittstelle zugeordnet ist, basierend, zumindest teilweise, auf dem Parameter;
das Bestimmen (330) einer auszuführenden Funktion, basierend, zumindest teilweise, auf dem Befehl; und
das Ausführen (340) der Funktion, wobei die grafische Benutzerschnittstelle einen virtuellen physischen Raum (230, 232, 234, 236) umfasst;
wobei der virtuelle physische Raum (230, 232, 234, 236) einen ersten virtuellen physischen Raum (232) und die grafische Benutzerschnittstelle eine erste grafische Benutzerschnittstelle (210, 240, 410, 500, 600, 700, 800) umfasst, ferner Folgendes umfassend:
das Empfangen eines Signals von einer zweiten Vorrichtung, das eine Anforderung angibt, die zweite Vorrichtung mit dem virtuellen physischen Raum zu verbinden, wobei die zweite Vorrichtung eine zweite grafische Benutzerschnittstelle anzeigt, umfassend einen zweiten virtuellen physischen Raum (234);
**gekennzeichnet durch**:
das Verbinden des virtuellen physischen Raums mit dem zweiten virtuellen physischen Raum, so dass ein Benutzer der ersten Vorrichtung sowohl den ersten als auch den zweiten virtuellen physischen Raum betrachten kann und ein Benutzer der zweiten Vorrichtung sowohl den ersten als auch den zweiten virtuellen physischen Raum betrachten kann;
das Empfangen eines zweiten Sensorsignals von dem Sensor, wobei das Sensorsignal eine zweite Bewegung der Vorrichtung angibt; und
das Bestimmen einer Interaktion zwischen der ersten grafischen Benutzerschnittstelle und dem zweiten virtuellen physischen Raum, basierend auf der zweiten Bewegung;
der Befehl eine Auswahl eines virtuellen physischen Objekts (270-274, 280-284) innerhalb des zweiten virtuellen physischen Raums (234) umfasst; und
die Funktion eines von Folgenden umfasst:
i) eine Bewegungsfunktion oder eine Kopierfunktion, um das virtuelle physische Objekt (270-274, 280-284) vom zweiten virtuellen physischen Raum (234) zum ersten virtuellen physischen Raum (232) zu bewegen oder das virtuelle physische Objekt vom zweiten virtuellen physischen Raum zum ersten virtuellen physischen Raum zu kopieren; oder
ii) eine Betrachtungsfunktion, um den Inhalt eines virtuellen physischen Objekts zu betrachten.

## Revendications

1. Dispositif (100, 200, 400, 510, 610, 710, 810, 900) comprenant :
un boîtier (110) conçu pour être saisi par un utilisateur (110) ;
un afficheur (120, 620, 720) disposé dans le boîtier, l'afficheur étant conçu pour afficher une interface utilisateur graphique (210, 240, 410, 500, 600, 700, 800) ;
un capteur (140) disposé dans le boîtier, le capteur étant conçu pour détecter un mouvement du boîtier selon un certain degré de liberté ;
un processeur (130) disposé dans le boîtier et en communication avec l'écran et le capteur, le processeur étant conçu pour :
recevoir un signal de capteur du capteur, le signal de capteur comprenant un paramètre associé au mouvement (310) ;
déterminer (320) une commande associée à l'interface utilisateur graphique en fonction, au moins en partie, du paramètre ;
déterminer (330) une fonction à exécuter en fonction, au moins en partie, de la commande, et exécuter (340) la fonction ;
l'interface utilisateur graphique comprenant un espace physique virtuel (230, 232, 234, 236) ;
l'espace physique virtuel (230, 232, 234, 236) comprenant un premier espace physique virtuel (232), l'interface utilisateur graphique comprenant une première interface utilisateur graphique, et le processeur (130) étant en outre conçu pour :
recevoir un signal d'un second dispositif indiquant une demande de connexion du second dispositif au premier espace physique virtuel, le second dispositif exécutant une seconde interface utilisateur graphique comprenant un deuxième espace physique virtuel (234) ;
**caractérisé en ce que** le processeur est en outre conçu pour :
relier le premier espace physique virtuel au deuxième espace physique virtuel de sorte qu'un utilisateur du premier dispositif peut visualiser à la fois les premier et deuxième espaces physiques virtuels et qu'un utilisateur du second dispositif peut visualiser à la fois les premier et deuxième espaces physiques virtuels ;
recevoir un second signal de capteur du capteur (140), le second signal de capteur indiquant un second mouvement du dispositif ; et
déterminer une interaction entre la première interface utilisateur graphique (210, 240, 410, 500, 600, 700, 800) et le deuxième espace physique virtuel en fonction du second mouvement ;
la commande comprend une sélection d'un objet physique virtuel (270-274, 280-284) dans le deuxième espace physique virtuel (234) ; et
la fonction comprend l'un quelconque des éléments suivants :
i) une fonction de déplacement ou une fonction de copie permettant de déplacer l'objet physique virtuel (270-274, 280-284) du deuxième espace physique virtuel (234) vers le premier espace physique virtuel (232) ou permettant de copier l'objet physique virtuel du deuxième espace physique virtuel vers le premier espace physique virtuel ; ou
ii) une fonction de visualisation permettant de visualiser le contenu d'un objet physique virtuel.

2. Dispositif (100, 200, 400, 510, 610, 710, 810, 900) selon la revendication 1, dans lequel l'espace physique virtuel (230, 232, 234, 236) comprend l'un quelconque parmi :
i) une pluralité d'objets physiques virtuels (270-274, 280-284) ;
ii) un espace physique virtuel bidimensionnel ;
iii) un espace physique virtuel tridimensionnel.

3. Dispositif (100, 200, 400, 510, 610, 710, 810, 900) selon une quelconque revendication précédente, comprenant en outre un actionneur (150) et le processeur (130) étant en outre conçu pour générer un signal d'actionneur en fonction du mouvement et pour délivrer le signal d'actionneur à l'actionneur afin de provoquer un effet haptique.

4. Dispositif (100, 200, 400, 510, 610, 710, 810, 900) selon la revendication 1, dans lequel le processeur (130) est en outre conçu pour relier les premier (232) et deuxième espaces physiques virtuels (234) par :
A) la disposition d'un écran partiellement transparent situé à une limite entre le premier espace physique virtuel et le deuxième espace physique virtuel ; ou
B) la fusion du premier espace physique virtuel et du deuxième espace physique virtuel afin de créer un troisième espace physique virtuel (236) ;
de sorte que l'utilisateur de l'appareil peut visualiser un espace physique virtuel représentant le contenu de l'appareil et visualiser l'espace physique virtuel du second appareil.

5. Procédé (300) exécuté dans le dispositif selon la revendication 1, comprenant :
la réception d'un signal de capteur du capteur (140), le signal de capteur comprenant un paramètre associé à un mouvement (310) du dispositif ;
la détermination (320) d'une commande associée à l'interface utilisateur graphique en fonction, au moins en partie, du paramètre ;
la détermination (330) d'une fonction à exécuter en fonction au moins en partie, de la commande ; et
l'exécution (340) de la fonction, l'interface utilisateur graphique comprenant un espace physique virtuel (230, 232, 234, 236) ;
l'espace physique virtuel (230, 232, 234, 236) comprenant un premier espace physique virtuel (232), l'interface utilisateur graphique comprenant une première interface utilisateur graphique (210, 240, 410, 500, 600, 700, 800) comprenant en outre :
la réception d'un signal d'un second dispositif indiquant une demande de connexion du second dispositif à l'espace physique virtuel, le second dispositif affichant une seconde interface utilisateur graphique comprenant un deuxième espace physique virtuel (234) ;
**caractérisé en ce que** :
la connexion de l'espace physique virtuel au deuxième espace physique virtuel est réalisée de sorte qu'un utilisateur du premier dispositif peut visualiser à la fois les premier et deuxième espaces physiques virtuels et qu'un utilisateur du second dispositif peut visualiser à la fois les premier et deuxième espaces physiques virtuels ;
la réception d'un second signal de capteur du capteur, le signal de capteur indiquant un second mouvement du dispositif ; et
la détermination d'une interaction entre la première interface utilisateur graphique et le deuxième espace physique virtuel en fonction du second mouvement ;
la commande comprend une sélection d'un objet physique virtuel (270-274, 280-284) dans le deuxième espace physique virtuel (234) ; et
la fonction comprend l'un quelconque des éléments suivants :
i) une fonction de déplacement ou une fonction de copie permettant de déplacer l'objet physique virtuel (270-274, 280-284) du deuxième espace physique virtuel (234) vers le premier espace physique virtuel (232) ou permettant de copier l'objet physique virtuel du deuxième espace physique virtuel vers le premier espace physique virtuel ; ou
ii) une fonction de visualisation permettant de visualiser le contenu d'un objet physique virtuel.
